# EUROPEAN PATENT APPLICATION

(11) **EP 4 009 062 A1**
(43) Date of publication of application: **08.06.2022**
(21) Application number: 20306477.9
(22) Date of filing: 01.12.2020
(51) Int. Cl.: G01R 31/317, G06F 11/07, G06F 21/60

(54) **SYSTEM ON CHIP WITH VOLTAGE GLITCH DETECTION BASED ON CLOCK SYNCHRONIZATION MONITORING**

(71) Applicant: Thales DIS France SA, 92190 Meudon (FR)
(72) Inventor: TEGLIA, Yannick, 92190 Meudon (FR); LOUBET MOUNDI, PHILIPPE, 92190 Meudon (FR); GRAVELLIER, Joseph, 92190 Meudon (FR); DUTERTRE, Jean-Max, 92190 Meudon (FR)
(74) Representative: Bricks, Amélie

(57) **Abstract**

The invention relates to a system on chip (10, 20) comprising a memory controller (13, 23) having a clock synchronization circuitry based on a locked loop (16, 26). The system on chip further comprises a voltage glitch attack detector (17, 27) configured to monitor a clock synchronization signal generated by the clock synchronization circuitry and check whether the monitored clock synchronization signal is a nominal signal or a signal characteristic of a voltage glitch attack. The voltage glitch attack detector may be a software detector executed by a processing unit.

## Description

### TECHNICAL FIELD

The field of the invention is that of systems on chip embedding countermeasures against fault attack injection.

### BACKGROUND ART

Electronic devices may be subjected to different fault attacks such as voltage glitch injections or electromagnetic glitch injections.

Glitch injection is usually performed using voltage probes connected on a system on chip (SoC) power pads or electromagnetic probes relying on the surface of the SoC package or even though BBI (Body Bias injection). These techniques may generate a sudden drop or increase of voltage within the SoC that can traduce into a fault if timing constraint are violated or if the injection disturbs flip-flop data sampling. Glitch injection is also feasible remotely by maliciously programming hardware SoC resources (e.g. regulator).

Detecting injections is usually achieved using a dedicated hardware circuitry made of analog or digital sensors, such as delay sensors that can measure the impact of the voltage fluctuation on the logic propagation delay.

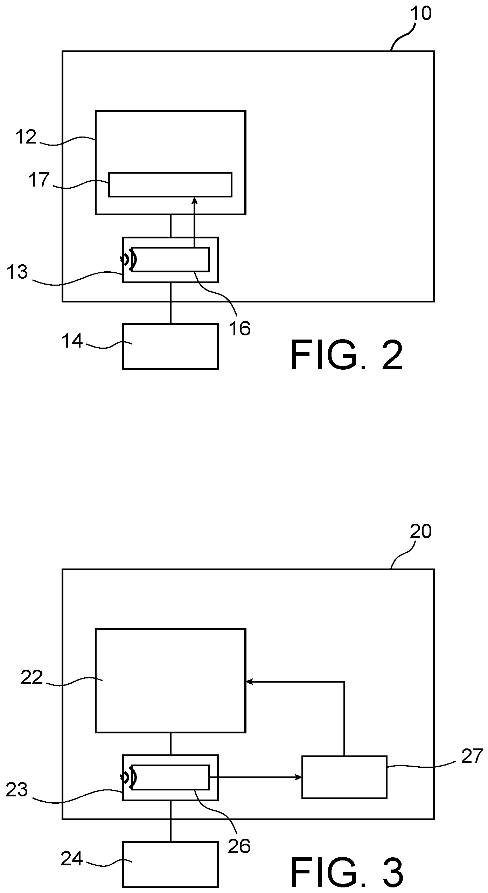

Figure 3 shows a SoC 1 equipped with such a dedicated hardware circuitry. The Soc 1 comprises a processing unit 2, a memory controller 3 that manages the flow of data going to and from an external memory 4, such as a DRAM (Dynamic Random-Access Memory), and a dedicated hardware circuitry 5 which comprises a voltage glitch attack sensor 6 and a voltage glitch attack detector 7 configured to monitor a signal sensed by the voltage glitch attack sensor 6 and to issue an alarm to the processing unit 2 in case it considers the monitored signal to be abnormal.

The silicon overhead associated to the implementation of such a dedicated circuitry (sensor 6 + detector 7) increases the overall SoC cost. For this reason, only a few number of devices (such as smart cards) are equipped and the vast majority of SoC devices remains unprotected against glitch attacks. At the same time, fault injection attacks are becoming more and more popular for the attackers as they can be conducted using low-cost facilities and provide significant results in performing privileged escalation, stealing cryptographic secrets or breaking security features.

In addition, the hardware circuitry may be maliciously muted, for instance by wire removal, and cannot be added after the SoC manufacturing.

### SUMMARY OF THE INVENTION

The invention aims at providing SoCs with low cost protection against voltage glitch injections. To this purpose the invention discloses a system on chip comprising a memory controller having a clock synchronization circuitry based on a locked loop and a voltage glitch attack detector configured to monitor a clock synchronization signal generated by the clock synchronization circuitry and to check whether the monitored clock synchronization signal is a nominal signal or a signal characteristic of a voltage glitch attack.

Hence, instead of implementing expensive dedicated hardware logic to detect the fault injection, the invention leverages a hardware circuit already spread in today SoC devices, namely the clock synchronization circuitry. The fault injection detection only relies on the monitoring of the clock synchronization circuitry and has no impact on its primary role of synchronizing the data transfer between the SoC and an external memory.

Some preferred, although non-limitative embodiments of this SoC are as follows:
- it further comprises a processing unit and the voltage glitch attack detector is a software detector executed by the processing unit;
- to check whether the monitored clock synchronization signal is a nominal signal or a signal characteristic of a voltage glitch attack, the voltage glitch attack detector is configured to compare the monitored clock synchronization signal to a threshold;
- the threshold is periodically readjusted to take into account temperature variations;
- the clock synchronization circuitry is a delay locked loop;
- the clock synchronization signal is a delay applied to a clock by the delay locked loop;
- the clock synchronization circuitry is a phase locked loop;
- the clock synchronization signal is a voltage applied to a voltage-controlled oscillator of the phase locked loop.

### BRIEF DESCRIPTION OF THE DRAWINGS

Some aspects, goals, advantages and features of the invention will be better understood from reading the following detailed description of preferred embodiments thereof, given as a non-limitative example and made with reference to the accompanying figures, in which:

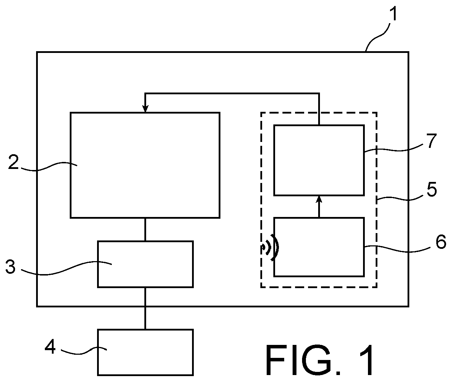

- Figure 1 shows a state-of-the-art fault injection detection system implemented within a SoC;
- Figure 2 shows a SoC according to the invention having a software voltage glitch attack detector;
- Figure 2 shows a SoC according to the invention having a hardware voltage glitch attack detector.

### DETAILED DESCRIPTION

Recent works proved that complex SoC devices contain several hardware resources that have their behavior changing with respect to voltage variations. In these works, such as in J. Gravellier, J. Dutertre, P. Loubet Moundi, Y. Teglia, and F. Olivier, "Remote Side-Channel Attacks on Heterogeneous SoC," 18th Smart Card Res. Adv. Appl. Conf., 2019, these resources were maliciously used to eavesdrop the processor activity leakage and perform side-channel attacks. The results obtained in attacking complex cryptographic algorithms prove the efficiency and the precision achievable using these resources.

The invention relies on the idea of changing the paradigm of victim/attacker. In this respect, the invention proposes, instead of using these resources as attack mediums, to use them as unsuspected voltage measurement units. More particularly, according to the invention, the state of these resources is monitored in order to track on-chip voltage fluctuations and detect potential attacks.

With respect to figures 2 and 3, the invention relates to a system on chip 10, 20 comprising a processing unit 12, 22 and a memory controller 13, 23 that handles data communication between the processing unit 12, 22 and a memory 14, 24, such as an external memory, a DRAM for instance.

Systems that communicate synchronously use a clock signal as a timing reference so that data can be transmitted and received with a known relationship to this reference. A difficulty in maintaining this relationship is that process, voltage and temperature variations can alter the timing relationship between the clock and data signals, resulting in reduced timing margins. This problem gets worse as signaling speeds increase, limiting the ability of systems to communicate data at higher speeds. In order to transmit and receive data at high speeds, this timing variation needs to be addressed. For this reason, the memory controller 13, 23 usually comprises a clock synchronization circuitry based on a locked loop 16, 26. The clock synchronization circuitry's primary role is to synchronize the data transfer between the processing unit 12, 22 and the memory 14, 24 to achieve high data transmission rates.

The clock synchronization circuitry based on a locked loop 16, 26 may be a Delay Locked Loop (DLL) or a Phase Locked Loop (PLL). DLLs and PLLs serve similar purposes, and can be used to maintain a fixed timing relationship between signals in environments where process, voltage, and temperature variations cause these relationships to change over time. DLLs and PLLs work by continuously comparing the relationship between two signals and providing feedback to adjust and maintain a fixed relationship between them.

DLLs are used to maintain the timing relationship between a clock signal and an output data signal. A critical element of a DLL is the phase detector, which detects phase differences between the clock and output data. The phase detector detects this phase difference and sends control information through a low pass filter to a variable delay line that adjusts the timing of the internal clock to maintain the desired timing relationship.

While PLLs can be used for the same purpose, they are also use to provide as outputs stable multiples of a clock or more fairly, multiple of a clock with bounded jitter while they are getting as inputs dirty clocks, possibly due to environmental variations as well.

According to the invention, the clock synchronization circuitry 16, 26 is used not only for its primary role of data transfer synchronization but also as a fault detection mechanism because its behavior reflects voltage variations and can therefore be used to monitor on-chip voltage fluctuations toward glitch detection. Importantly, the use of the clock synchronization circuitry 16, 26 for glitch detection does not preempt on its primary role. The fault detection only relies on the monitoring of a clock synchronization signal generated by the clock synchronization circuitry and has no impact on its operation.

To this end, still in relation to figures 2 and 3, the SoC 10, 20 further comprises a voltage glitch attack detector 17, 27 which gets an image of the actual on chip voltage level by reading continuously the state of the clock synchronization circuitry and is capable therefrom to detect a glitch. More particularly, the voltage glitch attack detector 17, 27 is configured to monitor a clock synchronization signal generated by the clock synchronization circuitry 16, 26 and check whether the monitored clock synchronization signal is a nominal signal or a signal characteristic of a voltage glitch attack.

The clock synchronization signal is automatically updated by the locked loop. Its value may be stored in a register to which the voltage glitch attack detector 17, 27 has access to.

For a DLL, the clock synchronization signal may be representative of the delay applied to the clock for synchronization. For instance, the clock synchronization signal may take a value between 0 and 255, with 0 being representative of the minimum delay applied to the clock and 255 being representative of the maximum delay applied to the clock.

For a PLL, the clock synchronization signal may be representative of the voltage applied to a voltage-controlled oscillator (VCO) of the PLL for clock synchronization. For instance, the clock synchronization signal may take a value between 0 and 255, with 0 being representative of the minimum voltage for the VCO and 255 being representative of the maximum voltage for the VCO.

In a first embodiment shown on figure 2, the voltage glitch attack detector is a software detector 17 executed by the processing unit 12. This software detector can periodically collect the clock synchronization signal and compare the collected signal to a threshold to verify that it does not go beyond a given limit which it is considered as a glitch. A minimum and a maximum threshold can be used to detect both positive and negative voltage glitches. In addition, the threshold(s) can be periodically readjusted to take into account temperature variations.

In a second embodiment shown on figure 3, the voltage glitch attack detector is a hardware detector 27 which similarly to the software detector collects the clock synchronization signal and compares it to a threshold. In case the threshold is exceeded, the hardware detector 27 can further be configured to send out an alarm to the processing unit 22, where this alarm can generate an interrupt, a warm reset, increment a counter, etc.

It is noted here that the access rate to the clock synchronization circuitry is limited by the bus speed with a software detector but not with a hardware detection while this access rate determines the efficiency in monitoring transient voltage fluctuations. In the other hand, a software detector is less costly as it does not use additional hardware logic. Further a software detector can be directly implemented on already existing devices. In addition, a software solution uses the clock synchronization circuitry, the data bus and the processing unit to operate so that removing a single one of these entities would result in breaking the SoC. Hardware solution can be potentially more vulnerable to wire cutting (e.g. an attacker can cut the alarm signal between the hardware detector 27 and the processing unit 22), although the hardware detector could be implemented within the clock synchronization circuitry for more security.

In both embodiments, the software or hardware detector 17, 27 is capable to read and interpret the state of the clock synchronization circuitry. The software or hardware detector 17, 27 can further be trained to identify the operating limits of the clock synchronization circuitry to distinguish nominal operations from operations characteristics of a voltage glitch attack.

For instance, at boot, the software or hardware detector 17, 27 starts. It continuously samples the clock synchronization signal which fluctuates with voltage variations. A first, default (for instance the last saved) operating limits [*min*: *max*] are primarily used (stored in memory). At run time, the operating limits [*min*: *max*] may be readjusted periodically to take into account temperature variations. At run time, the software or hardware detector 17, 27 continuously accesses the clock synchronization signal. If this signal exceeds the operating limits [*min*: *max*], an interrupt is generated or a fault counter is incremented. The processing unit then takes a decision depending on the limits and/or the fault acceptance.

In the invention, the dual job given to the clock synchronization circuitry makes the tampering of the sensing system difficult (e.g removing this circuitry would prevent memory communications). The invention offers a low-cost glitch detection solution based on recent discoveries around voltage fluctuations in SoC devices. It is dedicated to protect SoCs against the multiple glitch injection attack methods (local and remote). Furthermore, it allows a deployment on the field, for already manufactured devices that do not embed existing countermeasures or for which such countermeasures are either deemed not efficient enough or would need additional resistance.

The invention is not limited to the SoC described above but also extends to a method for voltage glitch attack detection in a system on chip 10, 20 comprising a memory controller 13, 23 having a clock synchronization circuitry based on a locked loop 16, 26. The method comprises the steps of monitoring a clock synchronization signal generated by the clock synchronization circuitry and of checking whether the monitored clock synchronization signal is a nominal signal or a signal characteristic of a voltage glitch attack. The invention further relates to a computer program product comprising instructions which, when the program is executed by a processing unit, cause the processing unit to carry out the steps of the above-mentioned method.

## Claims

1. System on chip (10, 20) comprising a memory controller (13, 23) having a clock synchronization circuitry based on a locked loop (16, 26), **characterized in that** it comprises a voltage glitch attack detector (17, 27) configured to monitor a clock synchronization signal generated by the clock synchronization circuitry and check whether the monitored clock synchronization signal is a nominal signal or a signal characteristic of a voltage glitch attack.

2. System on chip according to claim 1, further comprising a processing unit (12) and wherein the voltage glitch attack detector is a software detector (17) executed by the processing unit.

3. System on chip according to one of claims 1 and 2, wherein to check whether the monitored clock synchronization signal is a nominal signal or a signal characteristic of a voltage glitch attack, the voltage glitch attack detector (17, 27) is configured to compare the monitored clock synchronization signal to a threshold.

4. System on chip according to claim 3, wherein the threshold is periodically readjusted to take into account temperature variations.

5. System on chip according to any one of claims 1 to 4, wherein the clock synchronization circuitry (16, 26) is a delay locked loop.

6. System on chip according to claim 5, wherein the clock synchronization signal is a delay applied to a clock by the delay locked loop.

7. System on chip according to any one of claims 1 to 4, wherein the clock synchronization circuitry (16, 26) is a phase locked loop.

8. System on chip according to claim 7, wherein the clock synchronization signal is a voltage applied to a voltage-controlled oscillator of the phase locked loop.

9. Method for voltage glitch attack detection in a system on chip (10, 20) comprising a memory controller (13, 23) having a clock synchronization circuitry based on a locked loop (16, 26), **characterized in that** it comprises the steps of monitoring a clock synchronization signal generated by the clock synchronization circuitry and of checking whether the monitored clock synchronization signal is a nominal signal or a signal characteristic of a voltage glitch attack.

10. Computer program product comprising instructions which, when the program is executed by a processing unit, cause the processing unit to carry out the steps of the method of claim 9.
